# EUROPEAN PATENT SPECIFICATION

(11) **EP 1 579 045 B1**
(45) Date of publication and mention of the grant of the patent: **23.09.2009**
(21) Application number: 03782170.9
(22) Date of filing: 18.12.2003
(51) Int. Cl.: D03D 15/00, F21L 2/00, G02B 6/00, G09F 13/00, A41D 13/01, F21V 8/00

(54) **A WOVEN FABRIC WITH LIGHTGUIDES, AND A LIGHT SUPPLY HOLDER**
GEWEBE MIT LICHTLEITERN SOWIE HALTER FÜR LICHTQUELLE
TISSE AVEC DES GUIDES D'ONDES OPTIQUES ET SUPPORT D'ALIMENTATION EN LUMIERE

(30) Priority: 20.12.2002 DK 200200406 U
(43) Date of publication of application: 28.09.2005
(73) Proprietor: TL Lyngsa A/S, 9300 Saeby (DK)
(72) Inventor: LAUSTSEN, Torben, DK-9300 Saeby (DK)
(74) Representative: Larsen, Hans Ole
(86) International application number: PCT/DK2003/000893
(87) International publication number: WO 2004/057079

(56) References cited:
- GB-A- 2 305 848
- US-A- 6 072 619
- US-A- 6 086 235
- US-A1- 2002 187 697

## Description

### State of the art

The invention relates to a woven fabric of coated lightguides and threads which extend around the lightguides positioned in the same direction, which fabric may be illuminated through the lightguides.

Fabrics with lightguides woven into them are generally known because of the lighting effect which may be imparted to the lightguides by emission. This allows manufacture of fabrics with light effects and thereby a great signal value.

The specification of US 6 628 885 discloses an example of the use of fibre optics in the form of lightguides which are woven together to form a woven fabric with light-conducting fibres. Breaking of fibres at suitable locations on the individual lightguides will result in light emission at the locations concerned.

A corresponding weave is known from US 4 234 907, where the individual light-conducting fibre threads are broken at the locations where light emission is desired.

Both of these known weaves are limited in terms of their possibilities of light emission, viz. to the specific points on the fibres which all extend in the same direction and are mutually parallel. This one-sidedly extending lightguide bundle restricts the possibilities of establishing various light and colour changes to the extent and the predetermined position of the lightguides in the weave.

### Object of the invention

The object of the invention is to overcome the problems encountered by the prior art. This is done by providing that the fabric, during or after the weaving, is hot rolled to compress the fabric and thereby flatten the lightguides. This results in a fabric with a plane surface and even sidelighting. The flattening causes the lightguides to diffuse light in a direction out of the lightguides.

When, as stated in claim 2, the fibres are broken by means of e.g. laser light, light-emitting points may be established at the desired locations to form figures, etc.

When, as stated in claim 3, prints are provided on the fabric, it is additionally possible to make the print luminous by suitable provision of light emission.

### The drawing

An example of a woven fabric and its mounting according to the invention will be described more fully below with reference to the drawing, in which
- fig. 1: shows an enlarged section of the fabric and the holder,
- fig. 2: shows an enlarged section through the woven fabric,
- fig. 3: shows a perspective view of a piece of fabric and the holder with the light source prior to assembly, and
- fig. 4: shows an example of a piece of woven fabric with printed motif mounted in holders.

### Description of embodiments

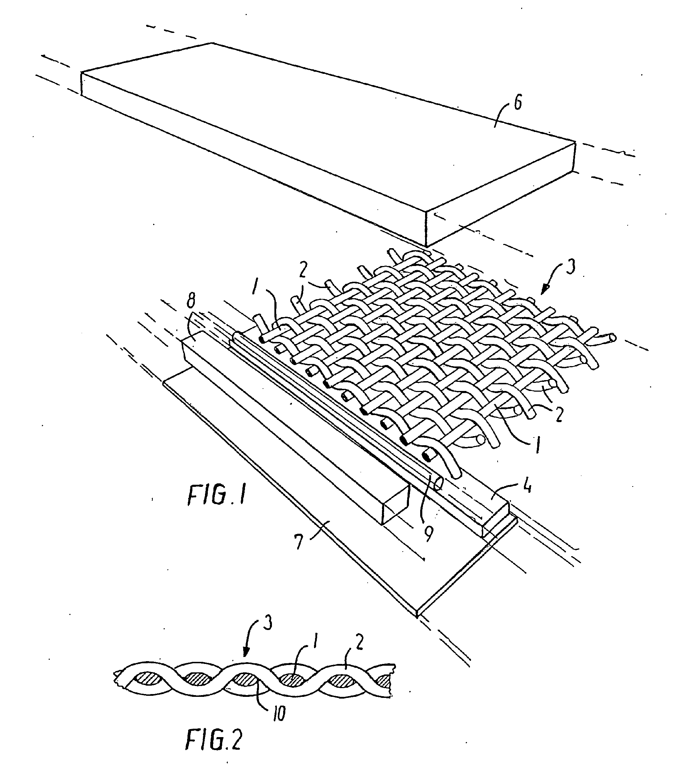

The basis of the invention is the fabric 3 which comprises weave threads, binder threads 2, which are woven together with lightguides 1, as indicated in figs. 1 and 2.

It will be possible to weave lightguides 1 which extend in just one direction, and they may also be woven transversely thereof.

The purpose of the crossing lightguides is to achieve an evenly distributed fine-meshed net of cross points for overlying lightguides and thereby for the light emission.

The lightguides 1 may be configured so as to be sidelighting.

As indicated in fig. 2, a subsequent rolling of the weave at a suitably high temperature will cause the lightguides 1 to be deformed particularly in the cross field and the cross-sectional profile to be changed to an oval by the flattening of the guides.

As a result, the woven fabric 3 will be compressed and have a relatively plane surface.

The weaving and the subsequent rolling cause the lightguides to diffuse light 10 in a direction out from the lateral edges of the lightguides, which will contribute to imparting a luminous effect to the weave.

If the fabric 3 is hot-rolled, the lightguides 1 will (optionally additionally) be sidelighting at the points where the lightguides cross either thread or light source. The lightguides 1 will be deformed and be softened and thereby be pressed together with the thread 2 or lightguide which extends transversely. This will result in a light loss in all the crosses and thereby make the fabric 3 more evenly sidelighting, no matter whether the lightguides 1 are woven in one or two directions.

As mentioned, laser treatment of the lightguides 1 is also a subsequent treatment and is a technique which may be used on rolled and non-rolled fabric, and fabric with woven sidelighting and non-sidelighting lightguides.

If there is a need for specific luminous locations or fields, ruptures may be burnt in the guides by means of laser light, which may be used for the creation of specific luminous points/extents in the weave.

The supply of light is to take place at the end faces of the lightguides, and in this respect the light-guiding holder shown in fig. 1 is suitable.

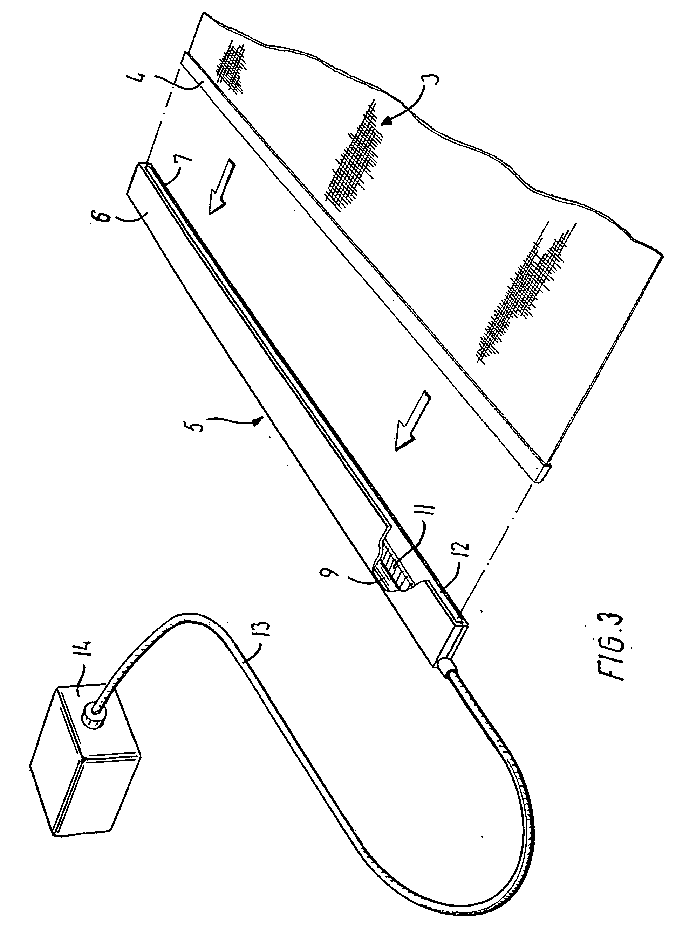

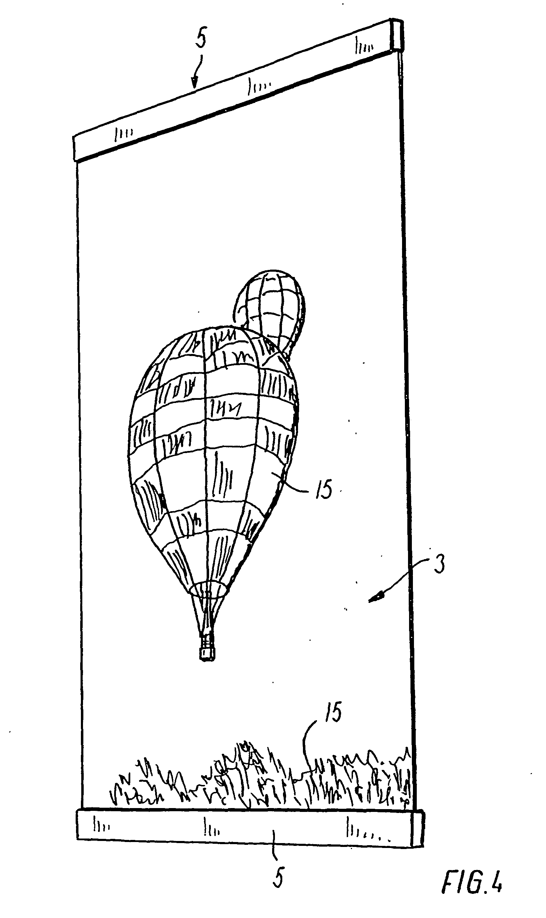

The holder comprises a base part 7 and a top part 6 which together form a holder 5 as shown in figs. 3 and 4.

Where the light source is present in the housing 5 itself, the light-emitting diode and the battery 8 as well as an optimal light lens 9 are positioned such that the light is emitted into the lightguides, as indicated in fig. 1.

In the event that the woven parts 3 must be capable of being exchanged, the holder 5 may be formed with a receiving slot 12, as indicated in fig. 3, into which a rail 4 secured on the weave 3 may be inserted.

This rail 4, applied to the lateral edge or edges of the weave, may be pressed into the holder 5, and the guides 1 are fed from the light source via a generally known light supply 11.

In the example shown in fig. 3, the battery and the diode 14 are connected to the holder via a lightguide cable 13.

Fig. 4 shows an example of a piece of woven fabric 3 on which a motif 15 has been printed, said fabric being mounted between two rails and holders 5.

As needed, the lightguides are treated for light emission at the desired locations so that the motif 15 appears luminous.

By suitable selection of generally known control technique the light may be modulated to a desired luminance and colour. This makes it possible to create many types of luminous motifs and designs.

The weave 3 according to the invention may be used for various purposes, including garments which may be provided with e.g. warning light, just as it is possible to cover walls and the like and provide them with light-emitting figures or other practical directions or instructions which, where appropriate, may give out light in case of an emergency.

This multiplicity of options for visual attention and influence has been made possible in that the weave has an unprecedentedly good light distribution and light emission because of the fine-meshed weave and the evenly distributed crosses between oppositely extending lightguides in the weave.

## Claims

1. A woven fabric of lightguides and threads which extend around the lightguides positioned in the same plane, which fabric may be illuminated through the lightguides, **characterized in that** the fabric (3), during or after the weaving, is hot rolled to compress the fabric and thereby flatten the lightguides (1).

2. A woven fabric according to claim 1, **characterized in that** partial ruptures are additionally provided in the lightguide thread (1) preferably by means of laser light.

3. A woven fabric according to claims 1 and 2, **characterized in that** printed motifs or text images (17) are provided on the weave.

## Patentansprüche

1. Gewebe aus Lichtleitern und Fäden, die um die Lichtleiter herum verlaufen, die in der gleichen Ebene angeordnet sind, wobei das Gewebe über die Lichtleiter beleuchtet werden kann, **dadurch gekennzeichnet, dass** das Gewebe (3) während des Webens oder danach warmgewalzt wird, um das Gewebe zusammenzudrücken und so die Lichtleiter (1) abzuflachen.

2. Gewebe nach Anspruch 1, **dadurch gekennzeichnet, dass** zusätzlich Teilbrüche vorzugsweise mittels Laserlicht in dem Lichtleiterfaden (1) erzeugt werden.

3. Gewebe nach den Ansprüchen 1 und 2, **dadurch gekennzeichnet, dass** aufgedruckte Motive oder Textbilder (17) auf der Bindung vorhanden sind.

## Revendications

1. Textile tissé de guides d'ondes lumineuses et de fils qui s'étendent autour des guides d'ondes lumineuses en étant placés dans le même plan, ledit tissu pouvant être illuminé par les guides d'ondes lumineuses, **caractérisé en ce que** le tissu (3), pendant ou après le tissage, est enroulé à chaud de façon à comprimer le tissu et, de cette façon, à aplatir les guides d'ondes lumineuses.

2. Textile tissé selon la revendication 1, **caractérisé en ce que** des coupures partielles sont additionnellement pratiquées sur le fil de guide d'ondes lumineuses (1), de préférence par le moyen d'un faisceau laser.

3. Textile tissé selon les revendications 1 et 2, **caractérisé en ce que** des motifs imprimés ou des images texte (17) sont disposés sur le tissu.
